# FASCICULE DE BREVET EUROPEEN

(11) **EP 0 669 223 B1**
(45) Date de publication et mention de la délivrance du brevet: **21.01.1998**
(21) Numéro de dépôt: 95400404.0
(22) Date de dépôt: 27.02.1995
(51) Int. Cl.: B60Q 1/26

(54) **Feu de signalisation à plusieurs lampes pour véhicule automobile**
Signalleuchte mit mehreren Lampen für Fahrzeuge
Signal light with a plurality of lamps for vehicle

(30) Priorité: 28.02.1994 FR 9402249
(43) Date de publication de la demande: 30.08.1995
(73) Titulaire: VALEO VISION, 93000 Bobigny (FR)
(72) Inventeur: Andrieu, Michel, F-81660 Pont de l'Arn (FR); Sentenac, Jean-Pierre, F-89100 Sens-Paron (FR)
(74) Mandataire: Le Forestier, Eric

(56) Documents cités:
- FR-A- 2 591 969

## Description

La présente invention concerne d'une façon générale les feux de signalisation de véhicules automobiles, et plus particulièrement un feu de signalisation conforme au préambule de la revendication 1.

Un tel feu de signalisation est avantageux en ce qu'il est économique à réaliser, et par son faible encombrement en profondeur.

Un exemple d'un tel feu de signalisation connu est décrit dans le document FR-A-2 591 969 au nom du prédécesseur en droit de la Demanderesse.

Dans ce feu de signalisation connu, les languettes souples saillantes tiennent lieu simultanément de contacts électriques assurant le maintien des lampes par leurs bases et de moyens de fixation des barrettes sur le socle.

Mais il s'est avéré extrêmement difficile dans la pratique de faire en sorte que ces languettes souples saillantes assurent à la fois un contact électrique satisfaisant avec les lampes et une fixation suffisamment fiable de la barrette associée. En effet, les languettes doivent présenter un certain degré de liberté et une certaine élasticité dans les douilles, notamment pour faire face aux écarts dimensionnels des bases des lampes, et il en résulte un manque de fermeté quant à la fixation assurée. Ce problème est encore plus crucial lorsque la barrette est réalisée par découpage dans une feuille métallique, nécessairement relativement épaisse.

La présente invention vise à pallier cet inconvénient et à proposer un feu à plusieurs lampes tel que mentionné en introduction, dans lequel les contacts électriques avec les lampes et la fixation et le positionnement des barrettes conductrices soient assurés avec une fiabilité bien meilleure, sans toutefois grever le coût de revient du feu.

L'invention vise également à simplifier la réalisation d'un connecteur destiné à l'alimentation électrique des lampes en parallèle.

Elle propose à cet effet un feu de signalisation tel que défini dans la revendication 1.

Des aspects, préférés, mais non limitatifs, du feu de signalisation de la présente invention sont définis dans les sous-revendications.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels:
- la figure 1 est une vue en perspective d'un élément conducteur d'un feu de signalisation à plusieurs lampes selon l'invention,
- la figure 2 est une vue en perspective d'un socle de feu de signalisation à plusieurs lampes selon l'invention équipé de deux éléments conducteurs,
- la figure 3 est une vue en perspective d'une variante de réalisation des éléments conducteurs,
- la figure 4 est une vue de détail en perspective d'une variante de réalisation des moyens de raccordement des éléments conducteurs à une source d'alimentation,
- les figures 5a et 5b illustrent en coupe transversale deux réalisations possibles de corps de douilles du socle,
- les figures 6a et 6b illustrent en perspective deux autres variantes de réalisation des moyens de raccordement des éléments conducteurs à une source d'alimentation,
- les figures 7a et 7b illustrent en perspective des détails de connexion pouvant être utilisés notamment dans les moyens de raccordement des figures 6a et 6b,
- la figure 8 est une vue en perspective éclatée d'une forme de réalisation concrète d'un feu de signalisation de la présente invention,
- la figure 9a est une vue de dessus d'un élément conducteur d'un feu selon une autre forme de réalisation concrète,
- la figure 9b est une vue de l'arrière de l'élément conducteur de la figure 9a,
- la figure 10 est une vue de dessus d'un socle du feu selon l'autre forme de réalisation concrète,
- la figure 11 est une vue en perspective du socle de la figure 10,
   la figure 12 est une vue en plan d'une tôle découpée destinée à former, par pliage, l'élément conducteur des figures 9a et 9b,
- la figure 13 est une vue de dessus en demi-coupe du feu selon l'autre forme de réalisation concrète à l'état assemblé, et
- la figure 14 est une vue de l'arrière du feu de la figure 13.

On notera préliminairement que, d'une figure à l'autre, des éléments ou parties identiques ou similaires sont désignés dans la mesure du possible par les mêmes signes de référence.

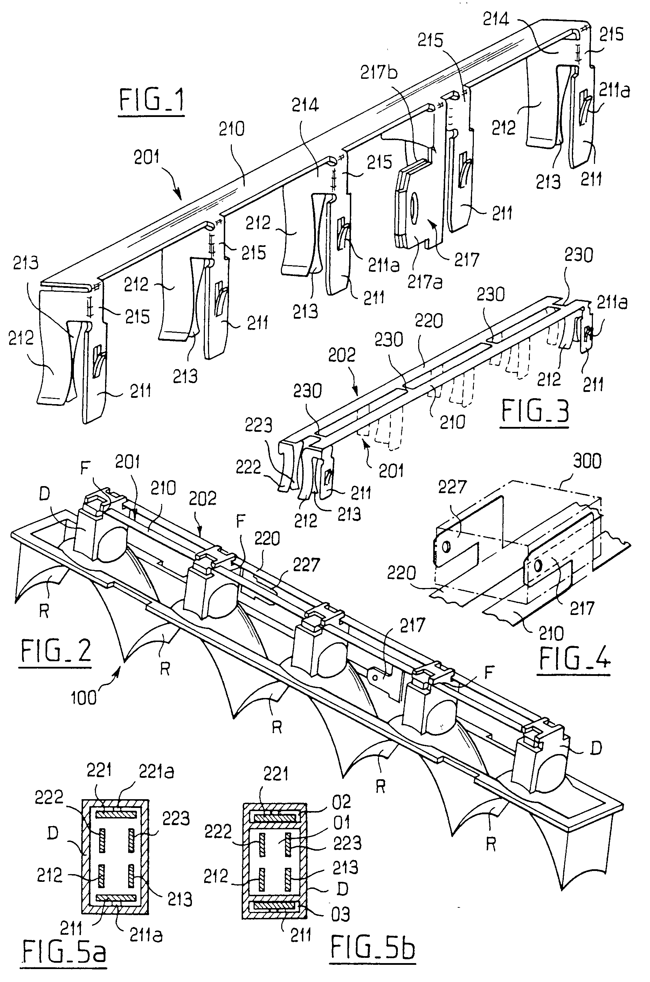

En référence tout d'abord à la figure 1, on a représenté un élément conducteur pour feu à plusieurs lampes qui est réalisé de préférence par pliage d'une pièce métallique plane découpée. Cet élément, globalement indiqué en 201, comprend une barrette rectiligne 210, de largeur constante.

A partir de cette barrette s'étendent en direction du socle (vers le bas sur la figure) une pluralité d'aménagements de connexion électrique, de positionnement et de fixation destinés à coopérer avec des corps de douille d'un socle multi-réflecteurs tel qu'on le décrira plus loin.

Ces aménagements sont régulièrement espacés le long de la barrette 210, avec un pas égal à celui des réflecteurs.

Chaque aménagement comprend une patte de positionnement et d'ancrage 211 pliée à environ 90° vers le bas. Le moyen d'ancrage consiste en l'espèce en un harpon 211a obtenu par découpage d'une zone centrale de la patte 211 et incliné en oblique vers l'extérieur de la patte du bas vers le haut. La patte 211 est reliée à la barrette 210 par une zone intermédiaire 215. De part et d'autre de cette zone 215 sont pliées à 90° le long de la barrette (vers le dessous sur la figure 1) deux parties en forme générale de L retourné, dont des branches verticales dirigées vers le bas, respectivement 212 et 213, s'étendent en vis-à-vis et constituent des languettes de pincement et de connexion électrique de la base d'une lampe de type "Wedge-Base", dite lampe à base en coin. Comme on l'observe, les deux languettes 212, 213 sont cintrées dans leur région inférieure, de manière à définir entre elles un espace dans lequel la base de la lampe peut être introduite et élastiquement enserrée. On notera ici que, du fait que les languettes 212, 213 s'étendent au-dessous de la barrette 210 et sont reliées à la zone intermédiaire 215 par une partie (indiquée en 214) qui s'étend à une faible distance de la face inférieure de ladite barrette, cette dernière peut constituer un soutien s'opposant à une déformation indésirable des parties en "L" lors de la mise en place d'une lampe.

L'élément conducteur comprend également, ici en une position intermédiaire sur sa longueur, une patte de connexion avec une source d'alimentation électrique.

Cette patte 217 est également venue de pliage, et est renforcée en comportant deux parties de même contour 217a, 217b repliées l'une contre l'autre. Elle s'étend en l'espèce dans une direction parallèle à celle de la barrette 210, mais dans un plan perpendiculaire au plan de la barrette.

La figure 2 montre un socle 100 de feu de signalisation à plusieurs lampes. Le socle définit sur une face (dirigée vers le bas sur la figure) une pluralité de réflecteurs R destinés à coopérer chacun avec une lampe du type mentionné plus haut, engagée dans une douille associée D prévue au fond de chaque réflecteur.

Deux éléments conducteurs identiques 201, 202 sont montés sur l'arrière des douilles (au-dessus des douilles sur la figure 2). Les diverses parties de l'élément 202 sont désignées par les signes de référence utilisés pour les parties correspondantes de l'élément 201, dans lesquels le chiffre des dizaines a été remplacé par un "2". Chaque paire de languettes élastiques 212, 213, 222, 223 est introduite dans la douille D, de même que les pattes de positionnement et de fixation associées 217 227.

Chaque douille peut comporter, pour renforcer la fixation des éléments 201, 202, des fentes latérales F dans lesquelles les barrettes 210, 220 sont engagées au cours de l'insertion des languettes de contact et des pattes de positionnement et de fixation.

La figure 5a montre un mode de réalisation du socle 100 dans lequel chaque douille D comporte simplement un orifice traversant rectangulaire. Les harpons 211a, 221a des pattes 211, 221 s'accrochent contre les parois des petits côtés de l'ouverture, le maintien desdites pattes en pression contre ces parois étant assuré par les fentes F dans lesquelles les barrettes sont engagées, qui limitent le déplacement desdites barrettes vers le centre de chaque douille.

La figure 5b illustre une variante de réalisation du socle 100 dans laquelle chaque douille D comporte une grande ouverture centrale O1 pour les languettes élastiques de contact 212, 213, 222 et 223, et deux petites ouvertures latérales O2 et O3 de taille légèrement plus grande que les pattes de positionnement et de fixation associées 217, 227. Dans cette variante, les fentes latérales prévues dans les douilles pour recevoir les barrettes peuvent être omises.

La figure 3 illustre une variante de réalisation avantageuse des deux éléments conducteurs 201, 202. Ces deux éléments sont réalisés initialement par découpage d'un circuit unique dans une feuille de métal, les deux éléments étant reliés au niveau de leurs barrettes 210, 220 par des pontets transversaux sécables 230 régulièrement espacés le long des barrettes. De cette manière, les deux éléments conducteurs 201, 202 peuvent être mis en place sur le socle par une opération unique, facilement robotisable, à la suite de laquelle un outil peut être mis en oeuvre, de façon également robotisable, pour sectionner les pontets et assurer l'isolement des éléments conducteurs l'un par rapport à l'autre.

En référence maintenant à la figure 4, on a illustré le cas où les deux éléments conducteurs 201, 202 comportent des pattes de connexion 217, 227 qui sont placées côte-à-côte et parallèlement l'une à l'autre. Un corps de connecteur en matière plastique, dont les contours sont indiqués schématiquement en 300, peut être fixé sur les pattes 217, 227 pour définir un connecteur mâle sur lequel on peut brancher, avec les moyens de détrompage et de verrouillage usuel, un connecteur femelle amenant la tension d'alimentation des lampes.

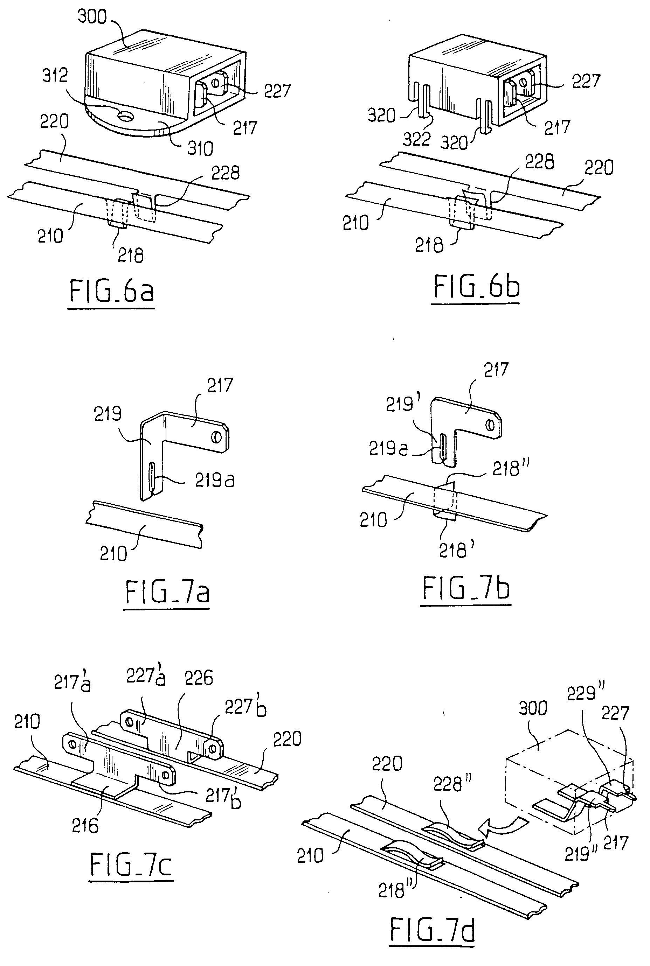

La figure 6a illustre une autre variante dans laquelle un connecteur 300 incorporant les pattes de connexion 217, 227, réalisé de préférence par surmoulage, peut être rapporté au-dessus des barrettes 210, 220 de manière à connecter lesdites pattes auxdites barrettes. Dans cette variante, le connecteur 300 comporte au moins une aile 310 (de préférence deux ailes situées de part et d'autre du corps principal) dans laquelle un trou 312 pour une vis est prévu. Cette vis permet la fixation du connecteur sur le socle, dans lequel un taraudage approprié est formé.

On observe sur la figure 6a que les deux barrettes 210, 220 comprennent, côte-à-côte, respectivement deux berceaux de section en forme générale de "U" 218, 228, aptes à recevoir et à enserrer élastiquement les bases des pattes de connexion 217 pour assurer la liaison entre lesdites pattes et les barrettes.

Dans la variante de la figure 6b, le connecteur 300 est fixé non pas sur le socle 100, mais sur les barrettes 210, 220. A cet effet, le corps principal de connecteur comporte, dans ses deux parois longitudinales opposées, deux pattes flexibles 320 qui débordent au-delà d'une face dudit corps de connecteur tournée vers les barrettes. Ces pattes 320 comportent des dents 322 tournées vers l'intérieur dans la région de leur extrémité libre.

De la sorte, le connecteur 300 peut être encliqueté sur les barrettes 210, 220, les pattes 320 venant se verrouiller au-dessous des barrettes pour assurer la fixation dudit connecteur. Dans cette variante, le contact entre les pattes de connexion 217, 227 et les barrettes 210, 220 est assuré de la même manière que dans le cas de la figure 6a.

Les figures 7a à 7d illustrent d'autres solutions possibles pour rapporter des pattes de connexion sur leur barrette respective. Dans le cas de la figure 7a, la patte 217 comporte une branche 219 s'étendant à angle droit et dans un plan perpendiculaire au plan de la patte, en direction de la barrette 210. Cette dernière s'étendant dans le même plan que celui de la patte 217. La branche 219 comporte à son extrémité tournée vers la barrette une encoche 219a s'ouvrant par un étranglement au niveau du bord inférieur de ladite branche, apte à recevoir et à enserrer élastiquement ladite barrette.

Dans la variante de la figure 7b, la patte de connexion 217 est définie par un élément plan en forme générale de L, dont une branche 219' s'étend en direction de la barrette associée 210, mais de façon décalée par rapport à celle-ci. Cette branche comporte, de la même manière que pour la figure 7a, une encoche ouverte 219a.

Dans cette région la barrette 210 comporte une partie pliée comportant une première zone 218' repliée vers le bas le long de la barrette, et une deuxième zone 218'' repliée vers l'extérieur par rapport à la première zone et destinée à s'engager dans l'encoche 219a.

Les variantes de réalisation des figures 7a et 7b peuvent être utilisées soit avec des pattes de connexion nues 217, 227, soit avec des pattes de connexion intégrées à des boîtiers de connecteur en matériau isolant, comme dans le cas des figures 6a et 6b.

La figure 7c illustre une autre variante dans laquelle des éléments de connexion sont rapportés sur les barrettes 210, 220. Ces éléments sont par exemple sertis ou soudés sur les barrettes. Ils comprennent chacun un corps central, respectivement 216, 226, de profil en "L", à partir duquel s'étendent, dans deux directions opposées et parallèlement aux barrettes, deux pattes de connexion respectivement 217a', 217b' et 227a', 227b'.

De cette manière, la connexion électrique peut être établie indifféremment dans une direction ou dans l'autre, et plusieurs modules lumineux peuvent être facilement reliés les uns aux autres en parallèle.

Dans la variante de la figure 7d, des pattes flexibles, respectivement 218'', 228'', sont découpées dans le matériau des barrettes respectives, en s'étendant longitudinalement, et sont cintrées.

Le connecteur associé 300 comprend deux éléments conducteurs côte-à-côte 219'', 229'', dont une partie inférieure plane est apte être pincée au-dessous de la patte flexible de la barrette respective. Les éléments conducteurs 219'', 229'' se terminent sur une face du connecteur par des picots de connexion 217, 227 aptes à être soudés ou enfichés.

On observera ici que le fait d'équiper les barrettes 210, 220 de connecteurs amovibles permet avantageusement, tout en conservant des éléments conducteurs d'une forme unique et bien déterminée, conçus en fonction de la seule configuration du socle du feu, d'associer à ces éléments des connecteurs de configurations variables et adaptées à des connecteurs complémentaires imposés par ailleurs.

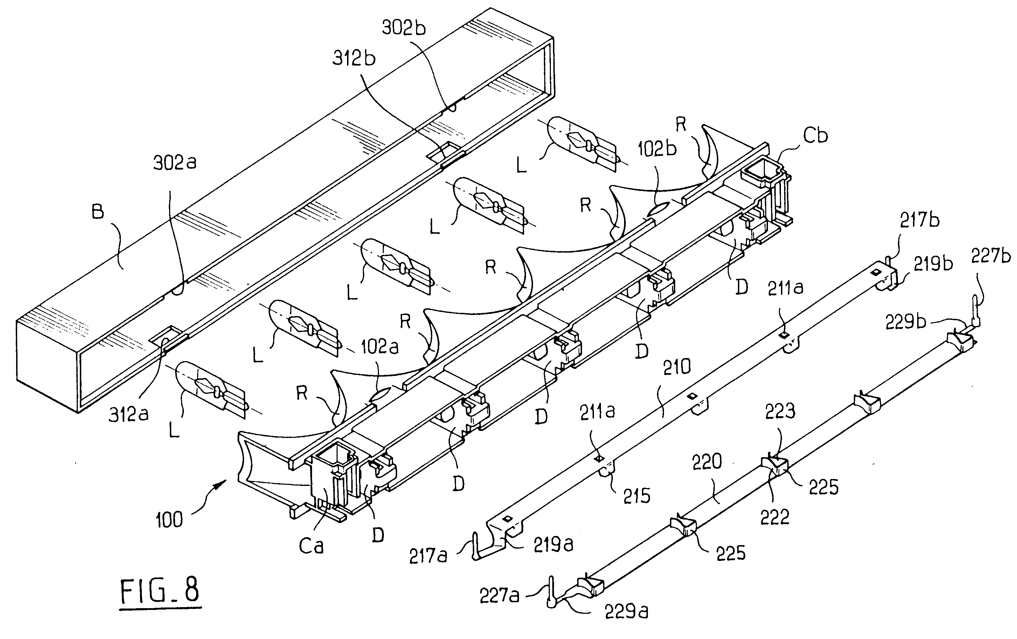

En référence à la figure 8, on a illustré un feu comprenant un socle 100 reçu dans un boîtier complémentaire B qui est fermé, au droit des réflecteurs R, par une partie formant voyant. Des aménagements d'encliquetage (dents 102a, 102b sur le socle 100, arrêts 302a, 302b, 312a, 312b sur le boîtier B) permettent de monter le socle dans le boîtier par encliquetage.

Le socle reçoit des éléments conducteurs 201, 202 contre ses faces supérieure et inférieure, à l'extérieur dudit socle. les languettes élastiques de contact 212, 213 et 222, 223 pénètrent dans les douilles D du socle 100. Ces languettes s'étendent le long des barrettes 210, 220, et pincent entre elles et lesdits éléments conducteurs les parois respectives des douilles D. Dans le même temps, des dents d'accrochage (indiquées en 211a pour l'élément conducteur 201) formées dans les barrettes 210, 220 au niveau desdites languettes de contact assurent, par un ancrage dans les parois du socle, un maintien convenable des deux éléments conducteurs.

Les lampes, toujours de type "Wedge Base", sont désignées par la référence L.

Selon un aspect important de la forme de réalisation de la figure 8, le socle définit, en l'espèce à ses deux extrémités deux corps creux de connecteurs Ca et Cb. Et les extrémités des barrettes 210, 220 sont conformées de manière à définir deux paires de broches mâles de contact, respectivement 217a, 227a et 217b, 227b, destinées lors du montage des éléments conducteurs à s'engager dans les corps creux de connecteurs respectifs. Ces broches de contact sont reliées aux barrettes 210, 220 par des parties de raccordement, respectivement 219a, 229a et 219b, 229b, l'ensemble étant réalisé, pour chaque élément conducteur, par simple pliage d'une tôle métallique découpée formée d'un seul tenant.

Sur la figure 8, les broches sont engagées dans les corps de connecteurs par le dessous, tandis que des connecteurs complémentaires destinés à l'alimentation électrique du feu sont montés dans lesdits connecteurs par le dessus.

On notera ici que la présence de deux connecteurs, un à chaque extrémité du feu, permet de créer une structure symétrique et donc de faciliter le raccordement électrique d'un feu susceptible d'occuper différents emplacements dans le véhicule.

Avantageusement, les corps creux de connecteurs Ca et Cb sont venus de moulage lors de la fabrication du socle 100 par injection de matière plastique.

Maintenant en référence aux figures 9a à 14, on a illustré une autre forme de réalisation concrète d'un feu, relativement voisine de celle de la figure 8. La structure des éléments conducteurs 201, 202 y est tout à fait voisine de celle de la figure 1, la description n'étant pas reprise ici et les mêmes signes de référence étant à chaque fois utilisés.

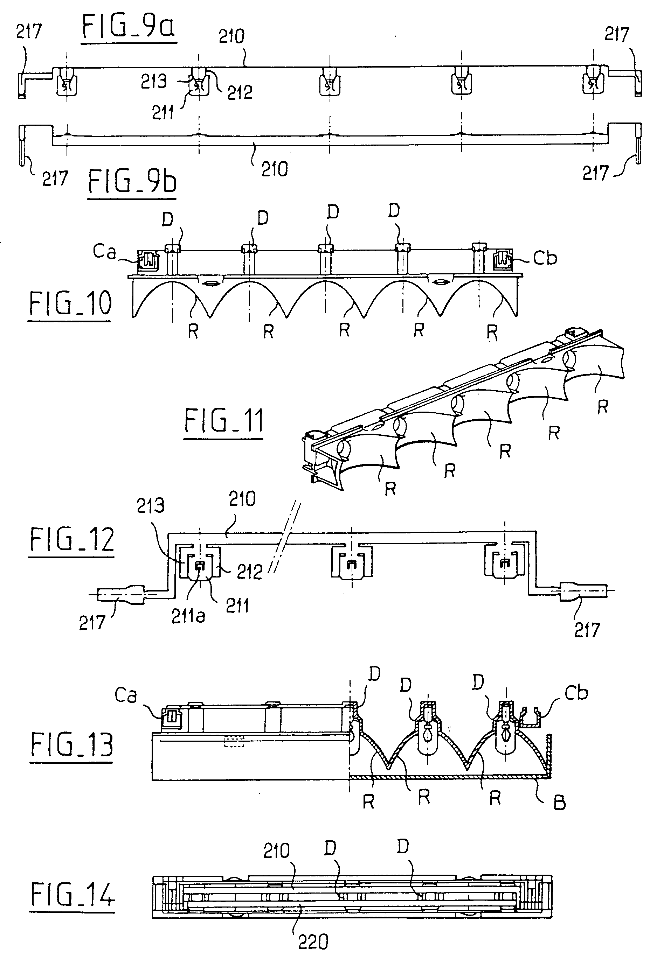

On observe que, comme dans le cas de la figure 8, les éléments conducteurs sont prolongés à chaque extrémité par des parties formant broches de contact mâles destinées à se loger dans des corps creux de connecteurs opposés Ca et Cb (voir notamment figures 9a, 9b et 12, broches 217a et 217b).

Bien entendu, dans tous les cas, les broches de contact 217a, 217b, 227a et 227b sont dimensionnées et placées de manière à pouvoir coopérer avec des éléments de connexion femelles complémentaires.

On réalise ainsi un feu qui, d'une manière extrêmement simple et économique, incorpore un ou plusieurs connecteurs pour l'alimentation électrique des lampes en parallèle.

L'invention s'applique tout à fait avantageusement à des feux économiques et peu profonds, notamment aux feux stop surélevés (sur plage arrière ou sur lunette arrière) en première monte ou en accessoires.

## Revendications

1. Feu de signalisation pour véhicule automobile, du type comprenant un ensemble de lampes (L), un socle (100) définissant une rangée de douilles (D) pour le montage des lampes (L), et des moyens (201, 202) de connexion électrique des lampes (L) avec une source d'alimentation extérieure comprenant deux barrettes (210, 220) conductrices pour la connexion des lampes (L) en parallèle à ladite source d'alimentation, chaque barrette (210, 220) comportant un ensemble de languettes souples saillantes (212, 213, 222, 223) engagées dans les douilles (D) respectives, caractérisé en ce que chaque barrette (210, 220) comprend en outre, au voisinage d'au moins une partie des languettes souples (212, 213, 222, 223) et de façon distincte de celles-ci, des aménagements d'ancrage (211, 221; 211a) aptes à coopérer avec des parois des douilles (D) associées.

2. Feu de signalisation selon la revendication 1, caractérisé en ce que lesdits languettes souples saillantes (212, 213, 222, 223) participent seulement au montage des lampes (L) et à leur connexion électrique avec la source d'alimentation, et en ce que lesdits aménagements d'ancrage (211, 221, 211a) comprennent des pattes (211, 221) de positionnement et d'ancrage.

3. Feu de signalisation selon la revendication 2, caractérisé en ce que chaque barrette (201, 202) comporte en association avec chaque douille (D) une paire de languettes souples en vis-à-vis (212, 213, 222, 223), en ce que la patte d'ancrage associée (211, 221) est pliée en direction du socle (100) à partir de la barrette (201, 202) et en ce que les languettes souples (212, 213, 222, 223) sont pliées le long de la barrette (201, 202) à partir d'une zone de liaison (215) entre la barrette (201, 202) et la patte d'ancrage (211, 221) associée.

4. Feu de signalisation selon la revendication 1, caractérisé en ce que chaque languette souple (212, 213; 222, 223) est repliée sensiblement parallèlement à la barrette associée (210, 220), de manière à emprisonner entre ladite barrette et les languettes souples (212, 213, 222, 223) une partie de paroi des douilles (D) associées, et en ce que chaque barrette (210, 220) comporte au droit de chaque douille (D) une dent d'ancrage (211a).

5. Feu de signalisation selon l'une des revendications 1 à 4, caractérisé en ce que chaque douille (D) comprend une ouverture unique pour les languettes souples (212, 213, 222, 223) et les pattes d'ancrage (211, 221) des deux barrettes (210, 220), et des moyens (F; D) pour limiter le mouvement des barrettes (210, 220) l'une vers l'autre.

6. Feu de signalisation selon l'une des revendications 2 et 3, caractérisé en ce que chaque douille (D) comprend une première ouverture (O1) pour les languettes souples (212, 213, 222, 223) et, de part et d'autre de la première ouverture, deux autres ouvertures (O2, O3) pour les pattes de positionnement et d'ancrage (211, 221) des deux barrettes (210, 220).

7. Feu de signalisation selon l'une des revendications 1 à 6, caractérisé en ce qu'il comprend en outre des éléments (217, 227) de connexion électrique avec la source d'alimentation, montés respectivement sur les deux barrettes (210, 220).

8. Feu de signalisation selon la revendication 7, caractérisé en ce que lesdits éléments de connexion (217, 227) sont montés de façon amovible au voisinage l'un de l'autre.

9. Feu de signalisation selon la revendication 7, caractérisé en ce que lesdits éléments de connexion (217a, 217b, 227a, 227b) sont réalisés d'un seul tenant avec les barrettes (210, 220).

10. Feu de signalisation selon l'une des revendications 7 à 9, caractérisé en ce qu'il comprend en outre un connecteur (300) comprenant un corps de connecteur abritant lesdits éléments de connexion (217, 227; 217a, 217b, 227a, 227b).

11. Feu de signalisation selon la revendication 10, caractérisé en ce que le corps de connecteur est rapporté sur le socle (100) par des moyens de montage (310, 320).

12. Feu de signalisation selon la revendication 10, caractérisé en ce que le corps de connecteur (Ca, Cb) est réalisé d'un seul tenant avec le socle (100).

13. Feu de signalisation selon la revendication 12, caractérisé en ce que le socle (100) est généralement allongé, en ce qu'il est prévu deux corps de connecteurs (Ca, Cb) realisés d'un seul tenant aux deux extrémités opposées du socle (100), et en ce que les corps de connecteurs (Ca, Cb) abritent des éléments de connexion formés respectivement aux deux extrémités opposées des barrettes (210, 220)

14. Feu de signalisation selon l'une des revendications 1 à 6, caractérisé en ce qu'il comprend en outre un connecteur (300) comprenant un corps de connecteur (Ca, Cb) et deux éléments (217, 227) de connexion des barrettes (210, 220) avec la source d'alimentation, et des moyens (320; 218'', 228'', 219'', 229'') de montage du corps de connecteur (Ca, Cb) sur les barrettes (210, 220)

15. Feu de signalisation selon l'une des revendications 8 et 14, caractérisé en ce que les barrettes (210, 220) et les éléments de connexion comportent des aménagements mâles/femelles (218) de contact électrique entre lesdites barrettes (210, 220) et lesdits éléments de connexion.

16. Feu de signalisation selon l'une des revendications 1 à 15, caractérisé en ce que les deux barrettes (201, 202) sont réalisées par découpage d'une pièce unique à partir d'une feuille de métal, et en ce que ladite pièce comporte entre les barrettes (210, 220) des pontets sécables (230) sectionnés après la mise en place des barrettes sur le socle (100).

## Claims

1. Indicator light for a motor vehicle, of the type comprising a set of bulbs (L), a base (100) defining a row of sockets (D) for mounting the bulbs (L), and means (201, 202) of electrically connecting the bulbs (L) with an external power source comprising two conductive bars (210, 220) for connecting the bulbs (L) in parallel to the said power source, each bar (210, 220) having a set of projecting flexible blades (212, 213, 222, 223) engaged in the respective sockets (D), characterised in that each bar (210, 220) also comprises, in the vicinity of at least some of the flexible blades (212, 213, 222, 223) and separately from the latter, anchoring arrangements (211, 221; 211a) able to cooperate with walls of the associated sockets (D).

2. Indicator light according to Claim 1, characterised in that the said projecting flexible blades (212, 213, 222, 223) participate solely in the mounting of the bulbs (L) and their electrical connection with the power source, and in that the said anchoring arrangements (211, 221, 211a) comprise positioning and anchoring lugs (211, 221).

3. Indicator light according to Claim 2, characterised in that each bar (201, 202) has, in association with each socket (D), a pair of facing flexible blades (212, 213, 222, 223), in that the associated anchoring lug (211, 221) is folded in the direction of the base (100) from the bar (201, 202) and in that the flexible blades (212, 213, 222, 223) are folded along the bar (201, 202) from a connecting zone (215) between the bar (201, 202) and the associated anchoring lug (211, 221).

4. Indicator light according to Claim 1, characterised in that each flexible blade (212, 213; 222, 223) is bent substantially parallel to the associated bar (210, 220), so as to trap, between the said bar and the flexible blades (212, 213, 222, 223), part of the wall of the associated sockets (D), and in that each bar (210, 220) has an anchoring tooth (211a) in line with each socket (D).

5. Indicator light according to one of Claims 1 to 4, characterised in that each socket (D) comprises a single opening for the flexible blades (212, 213, 222, 223) and the anchoring lugs (211, 221) for the two bars (210, 220), and means (F; D) for limiting the movement of the bars (210, 220) towards one another.

6. Indicator light according to one of Claims 2 and 3, characterised in that each socket (D) comprises a first opening (O1) for the flexible blades (212, 213, 222, 223) and, on each side of the first opening, two other openings (O2, O3) for the positioning and anchoring lugs (211, 221) for the two bars (210, 220).

7. Indicator light according to one of Claims 1 to 6, characterised in that it also comprises elements (217, 227) for electrical connection with the power source, mounted respectively on the two bars (210, 220).

8. Indicator light according to Claim 7, characterised in that the said connection elements (217, 227) are removably mounted in the vicinity of each other.

9. Indicator light according to Claim 7, characterised in that the said connection elements (217a, 217b, 227a, 227b) are produced in one piece with the bars (210, 220).

10. Indicator light according to one of Claims 7 to 9, characterised in that it also comprises a connector (300) comprising a connector body screening the said connection elements (217, 227; 217A, 217B, 227A, 227B).

11. Indicator light according to Claim 10, characterised in that the connector body is attached to the base (100) by mounting means (310, 320).

12. Indicator light according to Claim 10, characterised in that the connector body (Ca, Cb) is produced in a single piece with the base (100).

13. Indicator light according to Claim 12, characterised in that the base (100) is generally elongate, in that provision is made for two connector bodies (Ca, Cb) produced in a single piece at the two opposite ends of the base (100), and in that the connector bodies (Ca, Cb) shield connection elements formed respectively at the two opposite ends of the bars (210, 220).

14. Indicator light according to one of Claims 1 to 6, characterised in that it also comprises a connector (300) comprising a connector body (Ca, Cb) and two elements (217, 227) for connecting the bars (210, 220) with the power source, and means (320; 218'', 228'', 219'', 229'') for mounting the connector body (Ca, Cb) on the bars (210, 220).

15. Indicator light according to one of Claims 8 and 14, characterised in that the bars (210, 220) and the connection elements have male/female arrangements (218) for electrical contact between the said bars (210, 220) and the said connection elements.

16. Indicator light according to one of Claims 1 to 15, characterised in that the two bars (201, 202) are produced by cutting out a single piece from a sheet of metal, and in that the said piece has, between the bars (210, 220), breakable bridges (230) cut after the fitting of the bars on the base (100).

## Patentansprüche

1. Signalleuchte für Kraftfahrzeuge, umfassend einen Satz Lampen (L), einen Sockel (100), der eine Reihe von Hülsen (D) für den Einbau der Lampen (L) bildet, und Mittel (201, 202) für den elektrischen Anschluß der Lampen (L) an eine externe Stromversorgungsquelle, die zwei leitende Schienen (210, 220) für den in Parallelschaltung erfolgenden Anschluß der Lampen (L) an die besagte Stromversorgungsquelle enthalten, wobei jede Schiene (210, 220) einen Satz vorspringender biegsamer Zungen (212, 213, 222, 223) umfaßt, die in die jeweiligen Hülsen (D) eingesetzt sind , **dadurch gekennzeichnet,** daß jede Schiene (210, 220) außerdem, in der Nähe mindestens eines Teils der biegsamen Zungen (212, 213, 222, 223) und von diesen getrennt, Verankerungsanordnungen (211, 221; 211a) enthält, die mit Wänden der zugehörigen Hülsen (D) zusammenwirken können.

2. Signalleuchte nach Anspruch 1, **dadurch gekennzeichnet,** daß die besagten vorspringenden biegsamen Zungen (212, 213, 222, 223) nur am Einbau der Lampen (L) und an ihrem elektrischen Anschluß an die Stromversorgungsquelle mitwirken und daß die besagten Verankerungsanordnungen (211, 221, 211a) Positionierungs- und Verankerungsansätze (211, 221) umfassen.

3. Signalleuchte nach Anspruch 2, **dadurch gekennzeichnet,** daß jede Schiene (201, 202) in Verbindung mit jeder Hülse (D) ein Paar gegenüberliegender biegsamer Zungen (212, 213, 222, 223) umfaßt, daß der zugehörige Verankerungsansatz (211, 221) in Richtung des Sockels (100) von der Schiene (201, 202) aus umgebogen ist und daß die biegsamen Zungen (212, 213, 222, 223) entlang der Schiene (201, 202) von einem Verbindungsbereich (215) zwischen der Schiene (201, 202) und dem zugehörigen Verankerungsansatz (211, 221) aus umgebogen sind.

4. Signalleuchte nach Anspruch 1, **dadurch gekennzeichnet,** daß jede biegsame Zunge (212, 213; 222, 223) in etwa parallel zu der zugehörigen Schiene (210, 220) gebogen ist, um zwischen der besagten Schiene und den biegsamen Zungen (212, 213, 222, 223) einen Wandteil der zugehörigen Hülsen (D) einzuschließen, und daß jede Schiene (210, 220) in Höhe jeder Hülse (D) einen Verankerungszahn (211a) umfaßt.

5. Signalleuchte nach einem der Ansprüche 1 bis 4, **dadurch gekennzeichnet**, daß jede Hülse (D) eine einzige Öffnung für die biegsamen Zungen (212, 213, 222, 223) und die Verankerungsansätze (211, 221) der beiden Schienen (210, 220) und Mittel (F; D) zur Begrenzung der Bewegung der Schienen (210, 220) zueinander enthält.

6. Signalleuchte nach einem der Ansprüche 2 und 3, **dadurch gekennzeichnet**, daß jede Hülse (D) eine erste Öffnung (O1) für die biegsamen Zungen (212, 213, 222, 223) und, beiderseits der ersten Öffnung, zwei weitere Öffnungen (O2, O3) für die Positionierungs- und Verankerungsansätze (211, 221) der beiden Schienen (210, 220) enthält.

7. Signalleuchte nach einem der Ansprüche 1 bis 6, **dadurch gekennzeichnet,** daß sie außerdem Elemente (217, 227) für den elektrischen Anschluß an die Stromversorgungsquelle umfaßt, die jeweils auf den zwei Schienen (210, 220) angebracht sind.

8. Signalleuchte nach Anspruch 7, **dadurch gekennzeichnet,** daß die besagten Anschlußelemente (217, 227) abnehmbar nahe beieinander angebracht sind.

9. Signalleuchte nach Anspruch 7, **dadurch gekennzeichnet,** daß die besagten Anschlußelemente (217a, 217b, 22za, 227b) einstückig mit den Schienen (210, 220) ausgeführt sind.

10. Signalleuchte nach einem der Ansprüche 7 bis 9, **dadurch gekennzeichnet,** daß sie außerdem einen Verbinder (300) umfaßt, der einen Verbinderkörper enthält, in dem die besagten Anschlußelemente (217, 227; 217a, 217b, 227a, 227b) angeordnet sind.

11. Signalleuchte nach Anspruch 10 , **dadurch gekennzeichnet,** daß der Verbinderkörper auf dem Sockel (100) durch Einbaumittel (310, 320) angefügt ist.

12. Signalleuchte nach Anspruch 10 , **dadurch gekennzeichnet,** daß der Verbinderkörper (Ca, Cb) einstückig mit dem Sockel (100) ausgeführt ist.

13. Signalleuchte nach Anspruch 12 , **dadurch gekennzeichnet,** daß der Sockel (100) allgemein länglich ausgeführt ist, daß zwei Verbinderkörper (Ca, Cb) vorgesehen sind, die einstückig an den beiden gegenüberliegenden Enden des Sockels (100) ausgeführt sind, und daß die Verbinderkörper (Ca, Cb) Anschlußelemente enthalten, die jeweils an den beiden gegenüberliegenden Enden der Schienen (210, 220) ausgebildet sind.

14. Signalleuchte nach einem der Ansprüche 1 bis 6, **dadurch gekennzeichnet,** daß sie außerdem einen Verbinder (300) umfaßt, der einen Verbinderkörper (Ca, Cb) und zwei Elemente (217, 227) für den Anschluß der Schienen (210, 220) an die Stromversorgungsquelle enthält, sowie Mittel (320; 218'', 228'', 219'', 229'') für den Einbau des Verbinderkörpers (Ca, Cb) auf den Schienen (210, 220).

15. Signalleuchte nach einem der Ansprüche 8 und 14, **dadurch gekennzeichnet,** daß die Schienen (210, 220) und die Anschlußelemente Steck- und Aufnahmeanordnungen (218) für den elektrischen Kontakt zwischen den besagten Schienen (210/220) und den besagten Anschlußelementen umfassen.

16. Signalleuchte nach einem der Ansprüche 1 bis 15, **dadurch gekennzeichnet,** daß die beiden Schienen (201, 202) durch Ausstanzen eines einzigen Teils aus einer Metallplatte ausgeführt sind und daß das besagte Teil zwischen den Schienen (210, 220) schneidbare Stege (230) enthält, die nach dem Einsetzen der Schienen auf dem Sockel (100) abgetrennt werden.
